# EUROPEAN PATENT SPECIFICATION

(11) **EP 1 454 198 B1**
(45) Date of publication and mention of the grant of the patent: **28.04.2010**
(21) Application number: 01952343.0
(22) Date of filing: 29.06.2001
(51) Int. Cl.: G05B 1/00, G05B 9/02, G05B 11/01

(54) **FAIL PASSIVE SERVO CONTROLLER**
AUSFALLPASSIVE SERVOSTEUERUNG
SERVOCONTROLEUR PASSIF APRES PANNE

(43) Date of publication of application: 08.09.2004
(73) Proprietor: Honeywell International Inc., Morristown NJ 07960 (US)
(72) Inventor: O'ROURKE, Kenneth, Glendale, AZ 85310 (US); WILKENS, Dean, Scottsdale, AZ 85262 (US); BEUTLER, Arthur, D., Phoenix, AZ 85022 (US)
(74) Representative: Haley, Stephen
(86) International application number: PCT/US2001/020902
(87) International publication number: WO 2003/003131

(56) References cited:
- US-A- 4 209 734
- US-A- 4 622 667
- US-A- 5 550 736
- US-A- 5 694 014

## Description

### 1. Technical Field

The present invention relates, generally, to fail passive servo controllers and systems, and more particularly, to fail passive servo controllers for brushless DC motors.

### 2. Background Art and Technical Problems

Various aircraft control systems have significantly improved safety, precision, and efficiency of travel. Many of these improvements are due in part to the control systems automating tasks that were previously performed by the vehicle operator. Such systems typically comprise a control unit which communicates with various servo units which in turn control the actions of the aircraft (e.g., turn, roll, climb, etc.). The servos generally include a motor, a gear unit and a clutch for engaging the motor and gear. When the motor and gear engage, among other functions, the servo acts to activate/manipulate control cables which control the actions of the aircraft. For example, autopilot servos may be used to control the aircraft during various stages of a flight plan.

Similarly, automatic landing systems (ALS), are often used to aid in landing the aircraft. However, given that landing an aircraft requires extremely precise control, the ALS should be fail passive. Stated otherwise, should the ALS fail, the ALS should not cause the aircraft to act in an undesirable manner (such as a sudden turn, roll or dive). For example, a non-fail passive servo drive has the potential to, in the absence of a command to do so, cause the servo to drive the motor and move the control cable(s) in one direction or another. This is often referred to as a "runaway" condition. When a runaway condition occurs, either system monitors or the pilot must detect the failure and disconnect the system, placing the aircraft under manual control.

Various landing standards are defined in the industry for describing the required precision of landing approaches. Exemplary standards include Category 1, or approximately one half mile visibility; Category 2, one eighth to one quarter mile visibility; and Category 3, with as little as 700 feet of visibility. Depending on the weather, in extreme conditions, visibility may be so low that the pilot is unable to see the aircraft's position relative to the runway, and the pilot must rely much more on the ALS system down to and including touchdown and roll out, Thus, at such times? precise ALSs may be used all the way through landing of the aircraft and is referred to as an "autoland". In many instances, ALS failures are minor and no hazards are posed. However, as the precision for an autoland increases, even minor failures can become more hazardous,

Further, current ALS systems typically used brushed DC motors. Brushed motors typically have multiple sets of rotor windings encased by one or more magnets. When the rotor windings are energized by an electric current, the rotor is polarized and the motor switches from one set of windings to the next. As the motor commutates, the rotor switches to the next set of windings, and a torque is created between the magnetic fields. However, brushed motor reliability is limited by brush wear and contaminant interaction with brush dust caused from normal use of the motor. In addition, brushed motors suffer performance disadvantages in the areas of thermal management and rotor inertia with respect to brushless motors.

Accordingly, methods, apparatus and systems are therefore needed in order to overcome these and other limitations of the prior art. Specifically, there is a need for application of fail passive DC motor control to brushless DC motors.

US-A-4622667 discloses a failed passive servo unit with servo input, servo equipment controller and employing two signal lanes for control.

The present invention provides an automatic landing system (ALS) fail passive servo unit, comprising:
an ALS input;
a brushless DC motor; and
a motor controller, having at least two corresponding signal lanes, wherein said corresponding signal lanes must agree for said motor to commutate, each signal lane having at least one FET switch, wherein when one of the two corresponding signal lanes fails to thereby produce a failed signal lane and a fault free signal lane, said motor controller causes a voltage of the failed signal lane to be equivalent to a voltage of the fault free signal lane or directs power from a FET switch of the failed signal lane to a FET switch of the fault free signal lane in order to cause a voltage differential across said brushless DC motor to be zero.

In an exemplary embodiment, the fail passive nature of the servo unit is accomplished by providing at least two independent signal and drive current paths for controlling the servo motor, As such, the servo motor will not generate torque unless the two independent signal lanes agree. For example, when a component such as processor, difference amplifier, or pulse width modulator (*PWM*) fails or otherwise ceases to function properly, servo motor will not runaway, but rather will fail with only minor transient movement, or alternatively, servo unit will lock at its current position. In this manner, servo motor will not generate a deviation from flight path or other significant control inputs until system monitors detect the fault and return control to the pilot.

### BRIEF DESCRIPTION OF THE DRAWINGS

Additional aspects of the present invention will become evident upon reviewing the non-limiting embodiments described in the specification and the claims taken in conjunction with the accompanying figures, wherein like numerals designate like elements, and:
**Figure 1** is a block diagram of a servo unit in accordance with the present invention receiving signals from an ALS and outputting signals to aircraft controls;
**Figure 2** is a schematic diagram of a servo unit with a "Y-Winding" brushless DC motor in accordance with an exemplary embodiment of the present invention;
**Figure 3** is a schematic diagram of a servo unit with a "Y-Winding" brushless DC motor in accordance with an alternative embodiment of the present invention;
**Figure 4** is a schematic diagram of a servo unit with a "Y-Winding" brushless DC motor in accordance with an alternative embodiment of the present invention;
**Figure 5** is a close-up schematic diagram of a "Y-Winding" brushless DC motor in accordance with an exemplary embodiment of the present invention;
**Figure 6** is a schematic diagram of a servo unit with a "Delta-Winding" brushless DC motor in accordance with an exemplary embodiment of the present invention; and
**Figure 7** is a close-up schematic diagram of a "Delta-Winding" brushless DC motor in accordance with an exemplary embodiment of the present invention.

### DETAILED DESCRIPTION OF EXEMPLARY EMBODIMENTS

The following descriptions are exemplary embodiments only, and are not intended to limit the scope, applicability, or configuration of the invention in any way. Rather, the following description provides a convenient illustration for implementing various embodiments of the invention. Various changes may be made in the function and arrangement of elements described in the illustrated embodiments without departing from the spirit and scope of the invention as set forth in the appended claims. In addition, while the following detailed description often refers to various functional block components and processing steps, it should be appreciated that such functional blocks may be realized by any number of hardware, firmware, and/or software components configured to perform the specified functions and may either be incorporated in a single unit or distributed over multiple units. For example, the present invention may employ various integrated circuit components, e.g., memory elements, digital signal processing elements, look-up tables, and the like, which may carry out a variety of functions under the control of one or more microprocessors or other control devices which may be of an either digital or analog nature. Such general techniques and components that are known to those skilled in the art are not described in detail herein. Similarly, while the present invention is described herein in conjunction with brushless DC motors and aircraft autoland operations, other aircraft operations (e.g., cruise, autopilot and the like) and alternative vehicles such as automobiles may also be substituted and still fall within the ambit of the appended claims.

That being said, the present invention provides apparatus, systems and methods for fail passive servo controllers for use in, for example, aircraft control systems. For example, in accordance with an exemplary embodiment of the present invention, a servo unit and an ALS used to control an aircraft during landing procedures is provided. In accordance with one aspect of this embodiment, upon a failure of one of the components of ALS, servo unit fails passively rather than actively. The fail passive nature of servo unit may be accomplished by providing at least two independent signal and drive current paths (signal lanes) for controlling the servo motor. As such, the servo motor will not generate torque unless the two independent signal lanes agree. For example, when a component such as processor, difference amplifier, or PWM fails or otherwise ceases to function properly, servo motor will not runaway, but rather will fail with only minor transient movement, or alternatively, servo unit will lock at its current position. In this manner, servo motor will not generate any deviation from flight path or significant control inputs until system monitors detect the fault and returns control to the pilot.

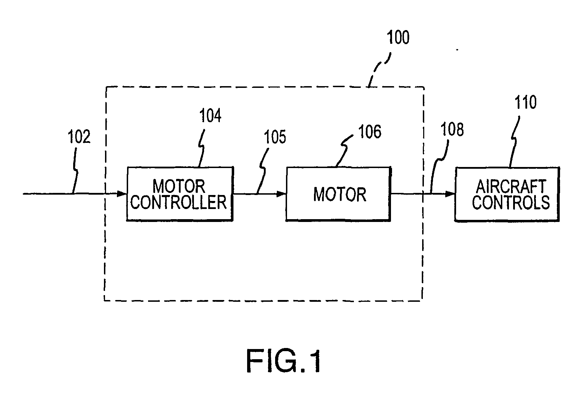

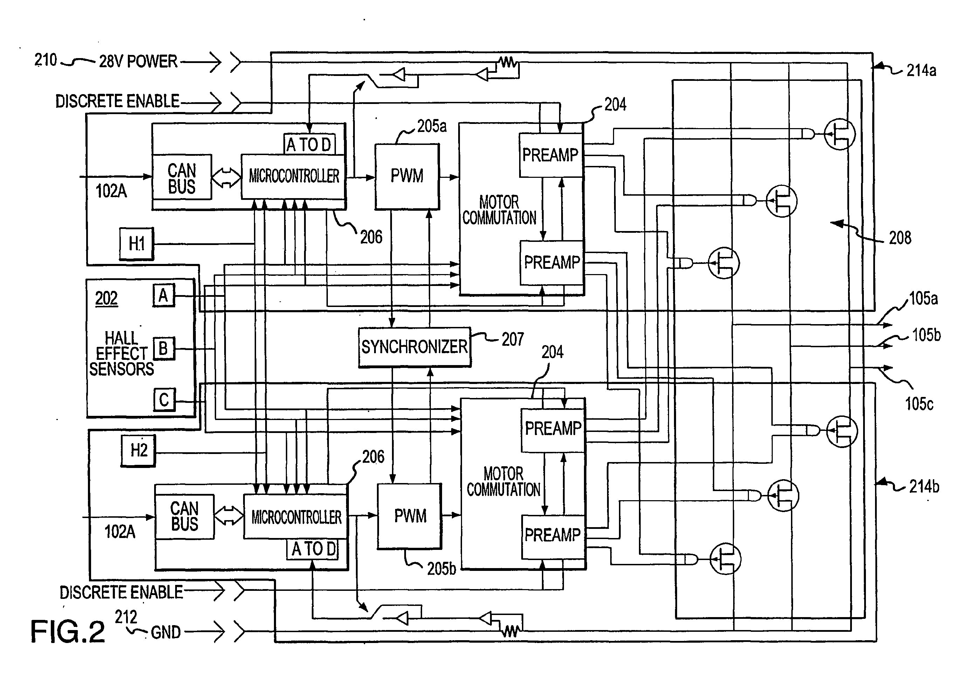

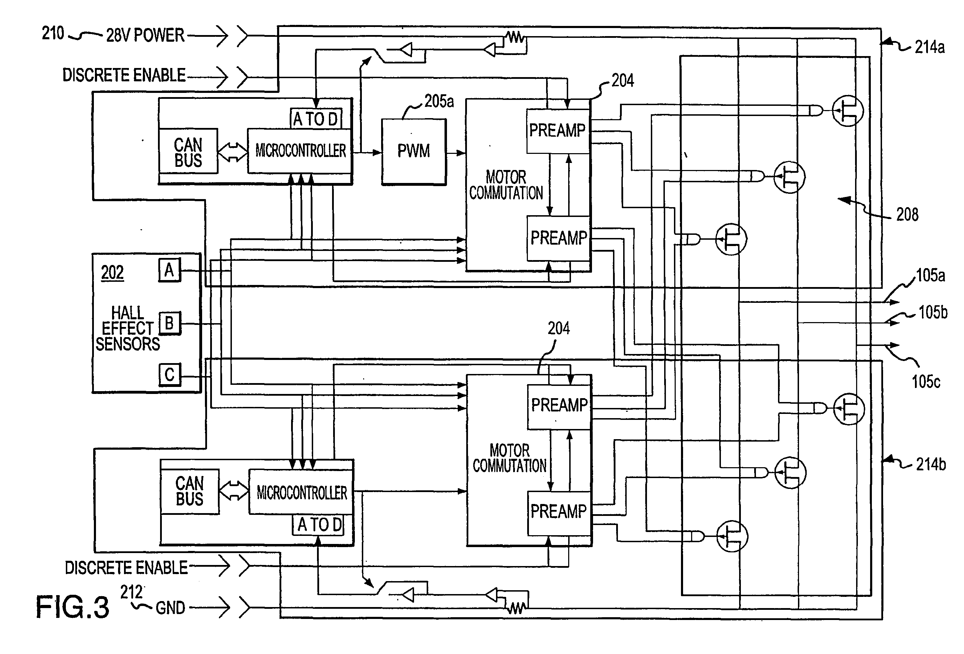

Thus, in accordance with an exemplary embodiment of the present invention and with reference to Figure 1, servo unit **100** comprises an ALS input **102,** a motor controller **104,** a motor **106** and a motor output **108.** ALS input **102** is a signal from any ALS controller now known or as yet unknown in the art capable of controlling a landing approach for an aircraft according to predefined standards, such as, for example, Category 1, 2 or 3 landings. As illustrated in Figures 2 and 3, ALS input **102** may be two independent signals. Alternatively, however, ALS input **102** may comprise a single signal. In such cases, it is preferable that signal **102** be monitored by controller **104** and have suitable self checking redundancy.

In the illustrated exemplary embodiments, ALS inputs **102A, B** enter motor controller **104** and the signals from the ALS, are processed and used to control motor **106** which in turn creates motor output **108** for controlling aircraft controls **110.** In the presently described, non-limiting embodiment, motor **106** is a brushless DC motor with a "Y-winding" configuration. However, as discussed in further detail herein, in accordance with various alternative embodiments of the present invention, motor **106** may comprise various alternative configurations and, in particular, may comprise a brushless DC motor with "delta-windings".

In accordance with the presently described embodiment, motor output **108** comprises any means suitable for mechanically translating the motion and torque of motor **106** into motion of aircraft controls **110.** Generally, aircraft controls **110** include various aircraft components such as column wheel, column, and pedal inputs, primary flight cables, throttle cables, control surface or hydraulic pilot valve inputs and the like. In the exemplary embodiment, output **108** is the actual mechanical output of motor **106** and is provided via standard servo gearing and/or clutch mechanisms. Thus, motor **106** directly controls aircraft controls **110;** in this embodiment, the primary flight cables. However, in accordance with various alternative embodiments of the present invention, output **108** may suitably comprise other types of now known or as yet unknown outputs for controlling aircraft controls **110.** For example, in accordance with various aspects of the present invention, the motion of motor **106** may be translated into various electronic, analog, digital control signals or the like (e.g., "fly-by-wire"), which in turn direct aircraft controls **110.**

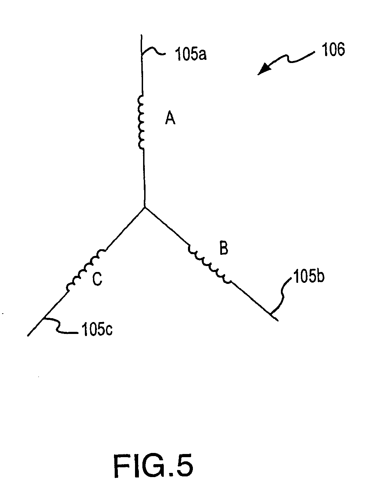

With reference to Figure 2, in accordance with an exemplary embodiment of the present invention, motor controller **104** controls a single, standard brushless DC motor **106** with Y-windings **A,B,C.** In this embodiment, motor controller **104** suitably comprises three controller outputs **105a-c** to motor **106.** With momentary reference to Figure 5, a close-up schematic diagram of the Y-windings **A,B,C** of motor **106** illustrates the connection of outputs **105a-c** to motor **106.**

As shown in Figure 5, an enclosed four-pole (two north and two south) magnetic rotor **402** within windings **A,B,C** is illustrated. The Y-configuration allows six different magnetic fields to be created based on the current directed through controller outputs **105a-c.** Thus, by alternating the current through controller outputs **105a-c** and thus, windings **A,B,C,** the magnetic field can be shifted, causing motor **106** to commute and thereby torquing rotor **402.**

In accordance with various embodiments of the present invention, motor controller **104** comprises at least two separate and independent signal lanes **214a,b.** Signal lanes **214a,b** suitably allow servo unit **100** to be fail passive in that, in accordance with the present invention should a component of servo unit **100** fail, causing either of lanes **214a** or **214b** of motor controller **104** to fail, thus causing a "hard voltage" to be supplied to motor **106,** motor controller **104** suitably limits the voltage applied to motor **106** so that the voltage of the failed lane is equivalent to that the fault free lane. Alternatively, upon such a failure of one of lanes **214a,b,** motor controller **104** suitably redirects power through one of the other motor input pairs **105a-c** in order to cause the voltage differential across motor **106** to be zero again; eliminating any magnetic fields which apply torque and turn motor **106.**

In accordance now with various aspects of the present invention, each signal lane **214a,b** of motor controller **104** suitably comprises various amplifiers **204** and microcontrollers **206** for controlling and providing power to a series of switches **208** which cause motor **106** to rotate to its desired position and, upon any failures of the components of lane **214a,b** cause motor **106** to fail passively. Additionally, in accordance with various embodiments of the present invention, motor controller **104** also suitably comprises power supplies **210,** grounds **212,** and various feedback mechanisms. One skilled in the art will appreciate that various configurations of motor controller may include any number and alternatives of the foregoing components and still fall within the ambit of the appended claims. For example, with reference to Figures 2-4 and 6, components such as PWMs and/or synchronizers may be desirable depending on such factors as loop gain, pulse width modulation logic, motor gearing, and the amount of acceptable transient motion. For example, Figure 2 illustrates an embodiment of the present invention having two PWMs **205a,b,** one in each signal lane, which are synched through the use of a synchronizer **207.** In contrast, Figure 3 illustrates an exemplary embodiment of the present invention, having only one PWM **205** in a single signal lane, thus also eliminating a need for a synchronizer.

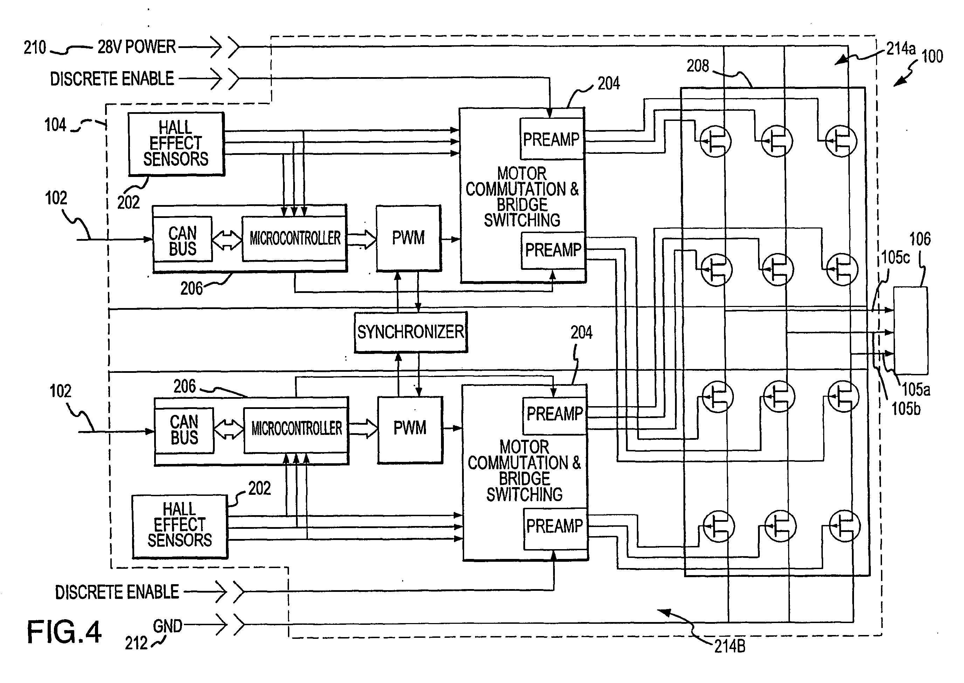

In the presently described embodiment, motor controller **104** suitably comprises at least one motor position sensor **202** which suitably enable motor controller **104** to know the location of motor **106** in its rotation. Knowing the position of motor **106** allows motor controller **104** to determine the polarity required in windings **A,B,C** in order to turn motor **106** to its desired position. In accordance with various embodiments of the present invention, one bank of sensors **202** may be in communication with both signal lanes **214a,b** (as shown in Figures 2, 3 and 6) or, alternatively, each signal lane **214a,b** may have its own bank of sensors **202** (as shown in Figure 4). In these exemplary embodiments, position sensor **202** comprises one bank of three standard hall effect sensors **202a,b,c** corresponding to windings **A,B,C.** Preferably, each sensor **202a,b,c** corresponds to a winding **A,B,C;** in the present exemplary embodiments, sensors **202a,b,c** are 120° apart. However, in accordance with various alternative embodiments of the present invention, varying numbers of sensors **202** as well as the banks containing sensors **202** may be provided. For example, as mentioned above and with reference to Figure 4, two banks of sensors **202** are provided. Similarly, the use of other types of sensors and commutation schemes (e.g., analog sensors, sinusoidal commutation and the like) likewise fall within the scope of the present invention.

Referring to Figure 4, as mentioned above, in accordance with the presently described embodiment, switches **208** are provided to suitably allow current through windings **A,B,C** to be controlled. In this embodiment, switches **208** comprise field effect transistors (FETs) such as International Rectifier HEXFET® devices. In the present embodiment, twelve FETs **208** are provided. However, in accordance with various alternative embodiments of the present invention, varying numbers of switches **208** may be provided. For example, with reference now to Figures 2 and 3, six FETs **208** are provided.

As previously mentioned, motor controller **104** is suitably configured so that servo unit **100** is fail/passive. For example, should a component of servo unit **100,** including either lane **214a,b** of motor controller **104** fail, causing a "hard voltage" to be supplied to motor **106,** motor controller **104** would either limit the voltage applied to motor **106** to that commanded by the fault free lane or redirects power through one of the other motor input pairs **105a-c** in order to cause the voltage differential across motor **106** to be zero; eliminating any magnetic fields which apply torque and turn motor **106.**

In the presently described embodiment and referring again to Figure 4, corresponding FETs **208** must first agree before current is passed through any of windings **A,B,C.** Stated otherwise, switches **208** and sensors **202** in each signal lane **214a,b** continuously operate to detect illegal combinations of sensor states and invalid sequences of transition (*e.g*., disproportionate voltages in each lane) by standard algorithms. Normal operation of motor controller **104** means each signal lane **214** is receiving substantially the same command. For example, an application of fail passive servo unit **100** in accordance with this embodiment of the present invention follows.

During normal operation, lanes **214a,b** can be expected to generate the same error signals between the position commanded and the position sensed by sensors **202** and thus similar PWM pulse widths should also be detected. Similarly, the outputs from each set of preamps **204** is expected to be similar resulting in, for a given motor **106** position, two series of FETs **208** connected bottom side and two series of FETs **208** connected top side are turned on. These devices will operate at a duty cycle determined by the PWMs. In the event of any failure of any FET **208** or any upstream circuitry within lanes **214a,b** which causes excessive FET **208** duty cycle (e.g., a FET short) which would otherwise lead to uncommanded movement, the series FET **208** associated with the fault free lane limits the duty cycle to the correct value. Thus, no single failure can lead to excessive duty cycle, torque, motion or the like.

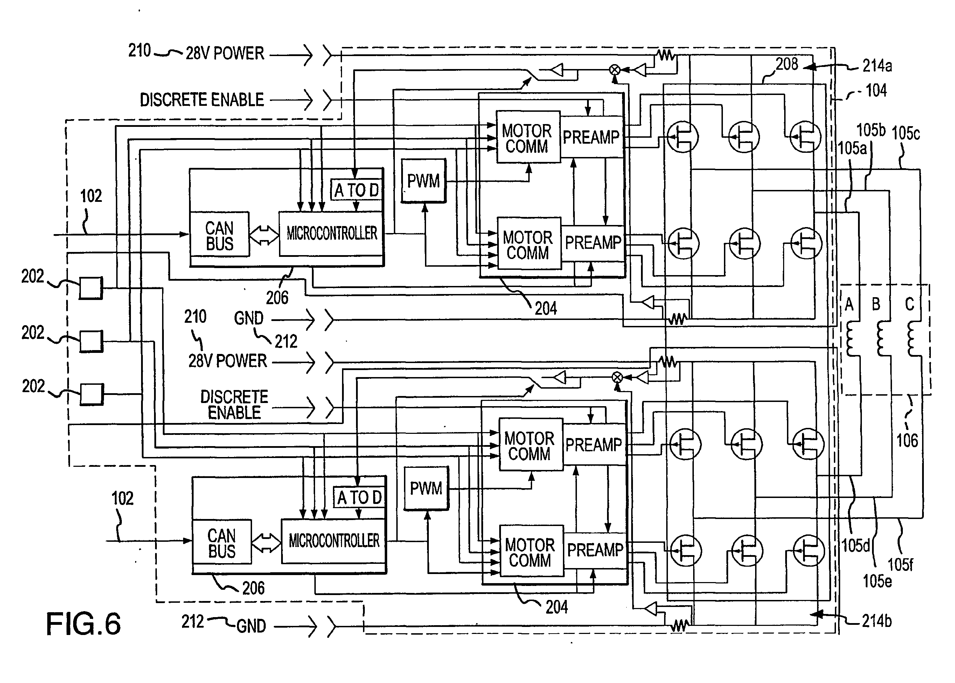

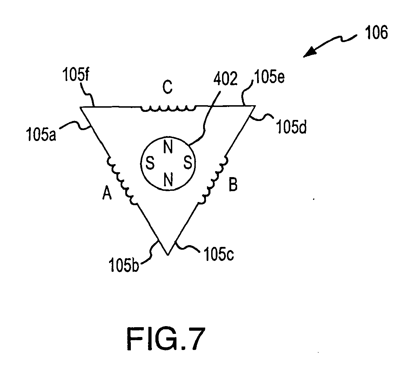

With reference now to Figure 6, in accordance with an alternative embodiment servo unit **100,** motor controller **104** controls a single, standard brushless DC motor with Delta-windings **A,B,C.** In this exemplary embodiment, motor controller **104** suitably comprises six controller outputs **105a-f** to motor **106.** With momentary reference to Figure 7, a close-up schematic diagram of the Delta-windings **A,B,C** of motor **106** illustrates the connection of outputs **105a-f** to motor **106.** An enclosed four-pole (two north and two south) magnetic rotor **402** within windings **A,B,C** is illustrated. The Delta-configuration allows six different magnetic fields to be created based on the current directed through controller outputs **105a-f.** By alternating the current through controller outputs **105a-f** and thus, windings **A,B,C,** the magnetic field can be shifted, torquing rotor **402** and causing motor **106** to turn. Thus, the Delta wound motor differs from the Y-wound motor primarily in that in the Y configuration one terminal of each coil **A,B,C** is available for connection with each of the other terminals of the three coils connected together whereas the both terminals of each coil of the Delta motor are externally accessible.

In accordance with various aspects of this Delta embodiment, each signal lane **214** of motor controller **104** again comprises various amplifiers **204,** microcontrollers **206** within each lane **214a,b** for controlling a series of switches **208.** Again, one skilled in the art will appreciate that various configurations of motor controller **104** may include any number and alternatives of the foregoing components and still fall within the ambit of the appended claims.

As mentioned above, again, motor controller **104** suitably comprises at least one motor position sensor **202** which suitably enables motor controller **104** to know the location of motor **106** in its rotation. This again allows motor controller **104** to know the required polarity of windings **A,B,C** to turn motor **106** to its desired position. In this embodiment, position sensor **202** again comprises three hall effect sensors **202a,b,c.**

With reference back to Figure 6, motor controller **104** is suitably configured so that servo unit **100** is fail/passive. Again, if a component of servo unit, including either of lanes **214a** or **214b** of motor controller **104,** fail, causing a "hard voltage" to be supplied to motor **106,** motor controller **104** would either limit the voltage applied to the motor to that commanded by the fault free lane or redirect power through one of the other motor input pairs **105a-c** in order to cause the voltage differential across motor **106** to be zero; eliminating any magnetic fields which apply torque and turn motor **106.**

In accordance with the presently described embodiment, switches **202** are provided to suitably allow current through windings **A,B,C** to be controlled. Again, switches **202** preferably comprise FETs. As in the previously described embodiment relating to Delta-winding brushless DC motors, in the present embodiment, corresponding FETs **202** must first agree before current is passed through any of windings **A,B,C.**

Additionally, as briefly mentioned above, alternative vehicles other than aircraft, such as automobiles, may use servo controllers in accordance with the present invention. For example, instead of a cable from a gas pedal to the carburetor of the automobile, an electrical connection with a servo controlling the throttle valve could be provided. Similar to the runaway conditions described above, it is undesirable for the pedal to carburetor connection to fail and maintain the throttle completely open, and thus, as controller as described above could be provided to prevent such conditions. Thus, servo controllers in accordance with the present invention are more fail passive and thus, safer and more reliable.

Finally, although the invention has been described herein in conjunction with the appended drawings, those skilled in the art will appreciate that the scope of the invention is not so limited. Modifications in the selection, design, and arrangement of the various components and steps discussed herein may be made without departing from the scope of the invention as set forth in the appended claims.

## Claims

1. An automatic landing system (ALS) fail passive servo unit (100), comprising:
an ALS input (102);
a brushless DC motor (106); and
a motor controller (104), having at least two corresponding signal lanes (214), wherein said corresponding signal lanes (214) must agree for said motor (106) to commutate, each signal lane having at least one FET switch (208), wherein when one of the two corresponding signal lanes fails to thereby produce a failed signal lane and a fault free signal lane, said motor controller (104) causes a voltage of the failed signal lane to be equivalent to a voltage of the fault free signal lane or directs power from a FET switch of the failed signal lane to a FET switch of the fault free signal lane in order to cause a voltage differential across said brushless DC motor (106) to be zero.

2. The ALS fail passive servo unit (100) of claim 1, further comprising at least one hall effect sensor (202) for detecting the position of said motor (106).

3. The ALS fail passive servo unit (100) of claim 2, wherein said hall effect sensor device (202) comprises three hall effect sensors,

4. The ALS fail passive servo unit (100) of claim 1, wherein said at least one FET device switch (208) comprises 6 FET switches.

5. The ALS fail passive servo unit (100) of claim 4, wherein said brushless DC motor (106) has windings in a Y-configuration

6. The ALS fail passive servo unit (100) of claim 1, wherein said at least FET switch (208) comprises 12 FET switches.

7. The ALS fail passive servo unit (100) of claim 6, wherein said brushless DC motor (106) has windings in a Delta-configuration.

## Patentansprüche

1. Fail-Passive-Servoeinheit (100) eines automatischen Landesystems (ALS), umfassend:
einen ALS-Eingang (102);
einen bürstenlosen Gleichstrommotor (106); und
eine Motorsteuerung (104) mit mindestens zwei entsprechenden Signalpfaden (214), wobei die entsprechenden Signalpfade (214) übereinstimmen müssen, damit der Motor (106) kommutiert, wobei jeder Signalpfad mindestens einen FET-Schalter (208) aufweist, wobei die Motorsteuerung (104), wenn einer der beiden entsprechenden Signalpfade versagt, um **dadurch** einen ausgefallenen Signalpfad und einen fehlerfreien Signalpfad zu erzeugen, bewirkt, dass eine Spannung des ausgefallenen Signalpfads gleich einer Spannung des fehlerfreien Signalpfads ist, oder Strom von einem FET-Schalter des ausgefallenen Signalpfads zu einem FET-Schalter des fehlerfreien Signalpfads leitet, um zu bewirken, dass ein Spannungsdifferenzial an dem bürstenlosen Gleichstrommotor (106) null ist.

2. ALS-Fail-Passive-Servoeinheit (100) nach Anspruch 1, die weiterhin mindestens einen Hall-Sensor (202) zur Erfassung der Position des Motors (106) umfasst.

3. ALS-Fail-Passive-Servoeinheit (100) nach Anspruch 2, wobei der Hall-Sensor (202) drei Hall-Sensoren umfasst.

4. ALS-Fail-Passive-Servoeinheit (100) nach Anspruch 1, wobei der mindestens eine FET-Schalter (208) 6 FET-Schalter umfasst.

5. ALS-Fail-Passive-Servoeinheit (100) nach Anspruch 4, wobei der bürstenlose Gleichstrommotor (106) Wicklungen in Y-Konfiguration aufweist.

6. ALS-Fail-Passive-Servoeinheit (100) nach Anspruch 1, wobei der mindestens eine FET-Schalter (208) 12 FET-Schalter umfasst.

7. ALS-Fail-Passive-Servoeinheit (100) nach Anspruch 6, wobei der bürstenlose Gleichstrommotor (106) Wicklungen in einer Delta-Konfiguration aufweist.

## Revendications

1. Unité d'asservissement (100) passive après panne pour système d'atterrissage automatique (ALS) comprenant :
une entrée d'ALS (102) ;
un moteur à courant continu sans balais (106) ; et
un contrôleur de moteur (104) comprenant au moins deux lignes de signal (214) correspondantes, lesdites lignes de signal (214) correspondantes devant être en accord pour que ledit moteur (106) commute, chaque ligne de signal comprenant au moins un commutateur à FET (208) et, lorsque l'une des deux lignes de signal correspondantes tombe en panne pour produire ainsi une ligne de signal en panne et une ligne de signal sans défaut, ledit contrôleur de moteur (104) produisant une tension de la ligne de signal en panne équivalente à une tension de la ligne de signal sans défaut ou dirigeant la puissance d'un commutateur à FET de la ligne de signal en panne vers un commutateur à FET de la ligne de signal sans défaut afin de produire une différence de potentiels égal à zéro aux bornes dudit moteur à courant continu sans balais (106).

2. Unité d'asservissement (100) passive après panne pour ALS selon la revendication 1, comprenant en plus au moins un capteur à effet hall (202) pour détecter la position dudit moteur (106).

3. Unité d'asservissement (100) passive après panne pour ALS selon la revendication 2, ledit capteur à effet hall (202) comprenant trois capteurs à effet hall.

4. Unité d'asservissement (100) passive après panne pour ALS selon la revendication 1, ledit au moins un commutateur à FET (208) comprenant 6 commutateurs à FET.

5. Unité d'asservissement (100) passive après panne pour ALS selon la revendication 4, ledit moteur à courant continu sans balais (106) étant doté d'enroulements avec une configuration en Y.

6. Unité d'asservissement (100) passive après panne pour ALS selon la revendication 1, ledit au moins un commutateur à FET (208) comprenant 12 commutateurs à FET.

7. Unité d'asservissement (100) passive après panne pour ALS selon la revendication 6, ledit moteur à courant continu sans balais (106) étant doté d'enroulements avec une configuration en triangle.
